# NEUE EUROPÄISCHE PATENTSCHRIFT

(11) **EP 0 937 632 B2**
(45) Veröffentlichungstag und Bekanntmachung des Hinweises auf die Entscheidung über den Einspruch: **10.08.2005**
(45) Hinweis auf die Patenterteilung: 28.08.2002
(21) Anmeldenummer: 98124730.7
(22) Anmeldetag: 28.12.1998
(51) Int. Cl.: B62D 33/06

(54) **Boden-Konstruktion am kippbaren Fahrerhaus eines Lastkraftwagen**
Floor construction of a tilt cab truck
Construction de plancher d'une cabine basculante d'un camion

(30) Priorität: 22.01.1998 DE 19802091
(43) Veröffentlichungstag der Anmeldung: 25.08.1999
(73) Patentinhaber: MAN Nutzfahrzeuge Aktiengesellschaft, 80976 München (DE)
(72) Erfinder: Kneifel, Eberhard, Dipl.-Ing., 89250 Senden (DE); Koch, Erich, Dipl.-Ing. (FH), 85757 Karlsfeld (DE); Schönegger-Fösleitner, Erich, Dipl.-Ing. (FH), 4400 Steyr (AT); Watzek, Gerhard, Dipl.-Ing. (FH), 80935 München (DE)

(56) Entgegenhaltungen:
- EP-A- 0 374 488
- EP-A- 0 394 131
- EP-A- 0 685 381
- DE-C- 4 446 046
- GB-A- 2 141 077
- US-A- 5 611 593

## Beschreibung

Die Erfindung betrifft gemäß dem Oberbegriff des Anspruchs 1 eine Boden-Konstruktion am kippbaren Fahrerhaus eines Lastkraftwagen, dessen Boden aus einem Motortunnelblech und mehreren Bodenblechen sowie inneren und äußeren Längsträgern zusammengesetzt ist.

Eine solche gattungsgemäße Bodenkonstruktion ist aus der EP0247295 A bekannt.

Bei LKW-Fahrerhäusern wird die tragende Struktur der Bodengruppe in der Regel durch vier Längsträger gebildet, wobei zwei an den Außenlängsseiten des Fahrerhauses und zwei weiter innen, links und rechts neben dem Motortunnel angeordnet sind. Diese vier Längsträger sind in der Regel durch eigenständige, in Profilform gepreßte Teile gebildet, die mit Anlageflanschen an den Bodenblechen zur Anlage gebracht und dort angeschweißt werden und dann einen geschlossenen Kastenträger bilden. Diese Bodengruppenteile werden dann durch ein für den jeweiligen Motoreinbau entsprechend gestaltetes Motortunnelblech zur fertigen Bodengruppe verbunden. Demnach besteht eine solche Fahrerhaus-Bodengruppe somit aus sieben Hauptbauteilen, nämlich einem Motortunnelblech, zwei Bodenblechen und vier Längsträgern.

Es ist demgegenüber Aufgabe der Erfindung, eine Konstruktion für einen Fahrerhaus-Boden zu schaffen, die sich durch weniger Einzelteile und mit geringeren Kosten auch im Hinblick auf die Ersatzteilvorhaltung darstellen läßt.

Diese Aufgabe ist erfindungsgemäß entsprechend den Merkmalen des Anspruches 1 durch eine Bodenkonstruktion gelöst.

Der technische Fortschritt und der Vorteil der erfindungsgemäßen Lösungen besteht in der Reduzierung der Bodengruppen-Hauptteile auf günstigstenfalls drei, nämlich ein Motortunnelblech und zwei Bodenbleche, wodurch sich eine Einsparung von Fertigungs- und Logistikkosten sowie eine Verringerung der Zusammenbautoleranzen ergibt Aufgrund der erfindungsgemäß integralen Ausformung der Längsträger aus den entsprechenden Blechen reduziert sich auch der Punktschweißaufwand erheblich, was ebenfalls zu einer nennenswerten Reduzierung der Fahrerhaus-Fertigungskosten beiträgt. Die Verringerung der Anzahl der Schweißstellen verringert auch das Korrosionsrisiko an der Fahrerhausunterseite.

Nachstehend sind die erfindungsgemäßen Lösungen anhand mehrerer in der Zeichnung dargestellter Ausführungsbeispiele noch näher erläutert. In der Zeichnung zeigen:
- Fig. 1: in perspektivischer Explosionsdarstellung von vom gesehen ein Motortunnelblech sowie ein linksseitig sich daran anschließendes Bodenblech und die beiden die linke Seitenwand eines Fahrerhauses bildenden Seitenwandbleche,
- Fig. 2: schematisch einen Ausschnitt aus der Bodenkonstruktion im hinteren Bereich eines Fahrerhauses mit einer Ausführungsform des inneren und äußeren Längsträgers,
- Fig. 3: schematisch einen Ausschnitt aus der Bodenkonstruktion gemäß Fig. 2 im Bereich der Türen,
- Fig. 4: schematisch einen Ausschnitt aus der Bodenkonstruktion im hinteren Bereich eines Fahrerhauses mit einer weiteren Ausführungsform des inneren und äußeren Längsträgers, und
- Fig. 5: schematisch einen Ausschnitt aus der Bodenkonstruktion gemäß Fig. 4 im Bereich der Türen.

In den Figuren sind gleiche bzw. einander entsprechende Bauteile mit gleichen Bezugszeichen angezogen.

Die Roh-Bodengruppe eines kippbaren LKW-Fahrerhauses besteht aus einem Motortunnelblech 1 und je einem sich an einer der beiden Seiten desselben anschließenden Bodenblech 2. An jedem Bodenblech 2 schließt sich außen eine Seitenwand 3 des Fahrerhauses an, die sich im Rohzustand aus zwei entsprechend gepreßten Blechen 3/1 und 3/2 zusammensetzt. Die Teile 1, 2, 3/1 und 3/2 sind jeweils durch Blechpreßteile gebildet.

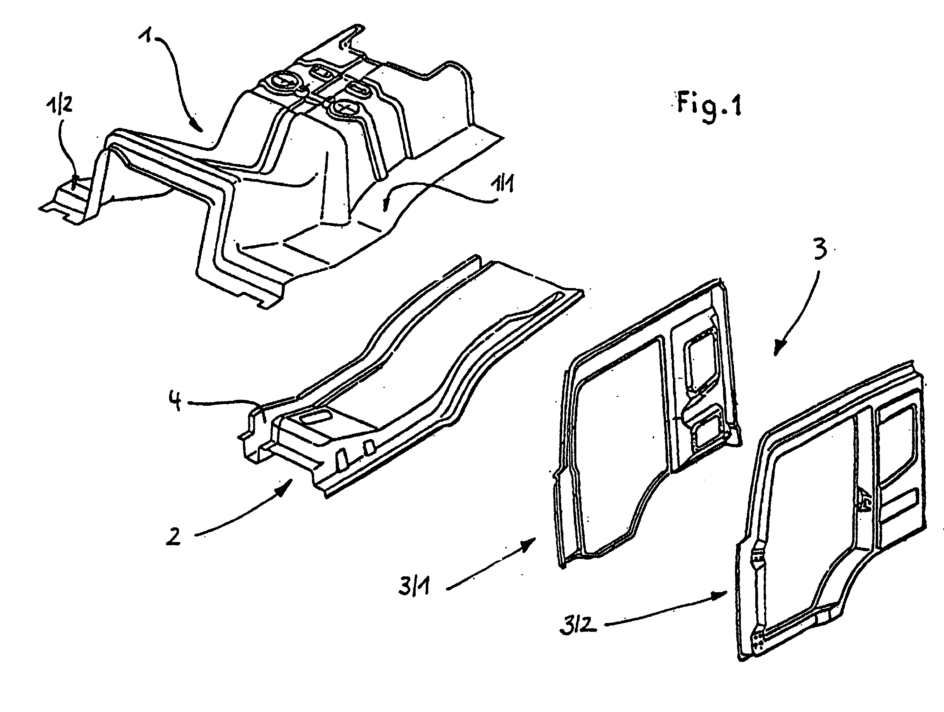

Die inneren Längsträger 4 sind durch integrale Ausformung am Motortunnelblech 1 und/oder den an diesem anschließenden Bodenblechen 2 gebildet. Dabei kann ein innerer Längsträger 4, wie aus der Zeichnung gemäß Figur 1, 2 und 3 ersichtlich, durch den im Querschnitt nach Art eines Hutprofiles mit nach unten ausgeformter Rinne 5 und beidseitigen Auflageflächen 6, 7 gestalteten inneren Randbereich 8 eines Bodenbleches 2 gebildet sein, wobei das im Querschnitt ebenfalls nach Art eines Hutprofiles gestaltete Motortunnelblech 1 mit jeweils einem seiner beiden unteren Querabschnitte 1/1, 1/2 die bodenblechinterne Rinne 5 überdeckt und an den beiderseits derselben gegebenen Auflageflächen 6, 7 aufliegend z. B. durch Punktschweißen befestigt ist, wodurch sich der innere Längsträger 4 in Form eines geschlossenen Kastenträgers ergibt.

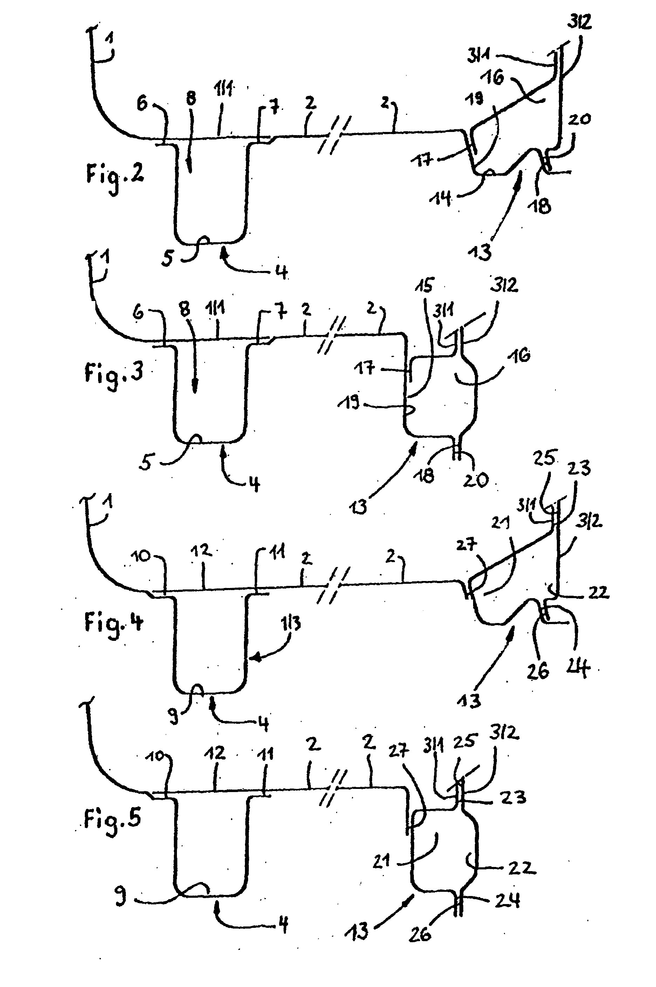

Altemativ hierzu kann ein innerer Längsträger 4 aber auch, wie die Figuren 4 und 5 zeigen, durch den im Querschnitt nach Art eines Hutprofiles mit nach unten ausgeformter Rinne 9 und beiderseits derselben gegebenen Auflageflächen 10, 11 gestalteten unteren seitlich äußeren Querabschnitt 1/3 des Motortunnelbleches 1 gebildet sein, an dem ein mit seinem ebenen Randbereich 12 die trägerbildende Rinne 9 überdeckendes und auf den beiderseits derselben gegebenen Auflageflächen 10, 11 aufliegendes Bodenblech 2, z. B. durch Punktschweißen, befestigt ist, wodurch sich der Träger 4 auch bei dieser Ausführungsvariante in Form eines geschlossenen Kastenträgers ergibt.

in den Figuren 2, 3 und 4, 5 ist jeweils im rechten Teil der Darstellung eine Ausführungsform der Erfindung für die Realisierung eines äußeren Längsträgers 13 aufgezeigt. Bei der Version gemäß Fig. 2, 3 ist ein solcher äußerer Längsträger 13 im hinteren Fahrerhausbereich (Fig. 2) durch eine am äußeren Randbereich eines Bodenbleches 2 nach unten ausgeformte Rinne 14, die - wie Fig. 3 zeigt - im Bereich einer Fahrerhaustür in eine Einbuchtung 15 übergeht, und eine Profilierung des unteren Randbereiches der beiden eine Seitenwand 3 bildenden Bleche 3/1, 3/2 im Sinne einer nach unten offenen Rinne 16 gebildet Dabei weisen diese beiden Bleche 3/1, 3/2 an ihren unteren Randbereichen zumindest annähernd vertikale Anschlußflächen 17, 18 auf, mit denen sie an entsprechenden inneren und äußeren Gegenflächen 19, 20 an der Rinne 14 bzw. Einbuchtung 15 anliegen und dort z. B. mittels Punktschweißen befestigt sind. Demzufolge stellt sich der äußere Längsträger 13 nach Vereinigung des Bodenbleches 2 mit den beiden Seitenwand-Blechen 3/1, 3/2 als geschlossener Kastenträger dar.

Bei der Ausführungsform gemäß Figur 4, 5 ist ein solcher äußerer Längsträger 13 durch eine Profilierung des unteren Randbereiches der beiden eine Seitenwand 3 bildenden Bleche 3/1, 3/2 mit Ein- und/oder Ausbuchtungen 21, 22 sowie Anlageflächen 23, 24, 25, 26 unterhalb und oberhalb der letzteren in dem Sinne gebildet, daß sich nach Zusammenfügung dieser beiden Bleche 3/1, 3/2 und Verbindung derselben z. B. durch Punktschweißen im Bereich der aneinander anliegenden Anlageflächen 23, 25 bzw. 24, 26 ein Kastenträger ergibt, der am abgewinkelten äußeren Rand 27 des Bodenbleches 2 anliegend z. B. durch Punktschweißen befestigt ist.

Für die Herstellung des Motortunnelbleches 1, der beiden Bodenbleche 2 und der beiden je eine Seitenwand 3 bildenden Bleche 3/1, 3/2 wird als Ausgangsmaterial ein Rohblech mit einer auf die Funktion der Längsträger 4, 13 abgestellten Dicke verwendet. Alternativ kann auch ein Blechverbund aus am Stoß zusammengeschweißten Blechen unterschiedlicher Dicke verwendet werden, wobei die dickeren Bleche bzw. Blechabschnitte jene Bereiche bilden, aus denen die Längsträger 4, 13 ausgeformt werden.

## Patentansprüche

1. Boden-Konstruktion am kippbaren Fahrerhaus eines Lastkraftwagen, dessen Boden aus einem Motortunnelblech (1) und mehreren Bodenblechen (2) sowie inneren und äußeren Längsträgern (4, 13) zusammengesetzt ist, **dadurch gekennzeichnet, daß** die äußeren Längsträger (13) durch integrale Ausformung am äußeren Randbereich jeweils eines Bodenbleches (2) und/oder am unteren Randbereich jeweils zweier eine Seitenwand (3) bildender Bleche (3/1, 3/2) realisiert sind, wobei die äußeren Längsträger (13) jeweils als geschlossener Kastenträger entweder
- durch eine am äußeren Randbereich eines Bodenbleches (2) nach unten ausgeformte Rinne (14) bzw. Einbuchtung (15) und eine Profilierung des unteren Randbereiches der beiden eine Seitenwand (3) bildenden Bleche (3/1, 3/2) im Sinne einer nach unten offenen Rinne (16) gebildet sind, wobei diese beiden Bleche (3/1, 3/2) an ihren unteren Randbereichen zumindest annähernd vertikale Anschlußflächen (17, 18) aufweisen, mit denen sie an entsprechenden Gegenflächen (19, 20) an der Rinne (14) bzw. Einbuchtung (15) anliegen und dort befestigt sind, demzufolge sich der äußere Längsträger (13) nach Vereinigung des Bodenbleches (2) mit den beiden Seitenwand-Blechen (3/1, 3/2) als Kastenträger ergibt, oder
- durch eine Profilierung des unteren Randbereiches derbeiden eine Seitenwand (3) bildenden Bleche (3/1, 3/2) mit Ein- und/oder Ausbuchtungen (21, 22) sowie Anlageflächen (23, 24, 25, 26) unterhalb und oberhalb derselben in dem Sinne realisiert sind, daß sich nach Zusammenfügung dieser beiden Seitenwand-Bleche (3/1, 3/2) und Verbindung derselben im Bereich der aneinander anliegenden Anlageflächen (23, 25; 24, 26) ein Kastenträger ergibt, der am abgewinkelten äußeren Rand (27) des Bodenbleches (2) anliegend befestigt ist.

2. Boden-Konstruktion nach Anspruch 1, **dadurch gekennzeichnet, daß** die inneren Längsträger (4) durch integrale Ausformung am Motortunnelblech (1) und/oder den an diesem anschließenden Bodenblechen (2) gebildet sind, wobei die innerenlängsträger (4) jeweils als geschlossener Kastenträger entweder
- durch den im Querschnitt nach Art eines Hutprofiles mit nach unten ausgeformter Rinne (5) und beiderseits derselben gegebenen Auflageflächen (6, 7) gestalteten inneren Randbereich (8) eines Bodenbleches (2) gebildet sind, wobei das im Querschnitt ebenfalls nach Art eines Hutprofiles gestaltete Motortunnelblech (1) mit jeweils einem seiner beiden unteren Querabschnitte (1/1, 112) die bodenblechinterne Rinne (5) überdeckt und an den beiderseits derselben gegebenen Auflageflächen (6, 7) aufliegend befestigt ist, oder
- durch den im Querschnitt nach Art eines Hutprofiles mit nach unten ausgeformter Rinne (9) und beiderseits derselben gegebenen Auflageflächen (10, 11), gestalteten unteren seitlich äußeren Querabschnitt (1/3) am Motortunnelblech (1) gebildet sind, an dem ein mit seinem ebenen Randbereich (12) die trägerbildende Rinne (9) überdekkende und auf den beiderseits derselben gegebenen Auflageflächen (10, 11) aufliegendes Bodenblech (2) befestigt ist.

## Claims

1. Floor construction in a tiltable cab of a truck whose floor is composed of an engine tunnel panel (1) and several floor panels (2) as well as of internal and external longitudinal members (4, 13), **characterised in that** the external longitudinal members (13) take the form of an integral shaping of the external margin area of one floor panel (2) each and/or in the lower margin of each pair of panels (3/1, 3/2) forming a side wall (3), whereby the external longitudinal members (13) are each designed as a closed box-type carrier either by a depression (14) or recess (15) in the outer margin area of a floor panel (2) and by the profiling of the lower margin area of the two panels (3/1, 3/2) forming a cab side wall (3) in the sense of a channel (16) open at the bottom, these two panels (3/1, 3/2) having in their lower margin areas at least approximately vertical connecting faces (17, 18) with which they contact the corresponding counterfaces (19, 20) on the depression (14) and at the recess (15) and are attached to said counterfaces (19, 20), as a result of which attachment the external longitudinal member (13), after the union of the floor panel (2) with the two side wall panels (3/1, 3/2), forms a box-type carrier or as a result of the profiling of the lower margin area of the two panels (3/1, 3/2) forming a side wall (3) and having recesses and/or protrusions (21/22) as well as contact faces (23, 24, 25, 26) at the lower and upper ends of said panels (3/1, 3/2) in the sense that after the joining of these two side-wall panels (3/1, 3/2) in the area of the adjacent contact faces (23, 25; 24, 26) a box-type carrier is formed which contacts the downward-angled outer margin area (27) of the floor panel (2) and is attached to it (27).

2. Floor construction according to Claim 1, **characterised in that** inner longitudinal members (4) take the form of an integral shaping of the engine tunnel panel (1) and/or of the floor panels (2) connected to it (1), whereby the inner longitudinal members (4) are each designed as a closed box-type carrier - either by the inner margin area (8) of a floor panel (2), the cross-section of which inner margin area (8) is designed like the profile of a hat with a depression (5) and support faces (6, 7) on both sides of said depression (5), whereby the engine tunnel panel (1), whose cross-section is also designed like the profile of a hat, covers with each of its two lower transverse sections (1/1, 1/2) the depression (5) in the floor panel (2), rests on the support faces (6, 7) provided on both sides of said depression (5) and is attached to said support faces (6, 7) - or by the lower lateral outer transverse section (1/3) on the engine tunnel panel (1), the cross-section of which lower lateral outer transverse section (1/3) is designed like the profile of a hat with a depression (9) and support faces (10, 11) on both sides of said depression (9), to which lower lateral outer transverse section (1/3) is attached a floor panel (2) which with its flat margin area (12) covers the carrier-forming depression (9) and rests on the support faces (10, 11) provided on both sides of said depression (9).

## Revendications

1. Construction de plancher au niveau de la cabine basculante d'un camion dont le plancher est formé d'une tôle de tunnel moteur (1) et de plusieurs tôles de plancher (2) ainsi que de longerons intérieurs et extérieurs (4, 13), **caractérisée en ce que** les longerons extérieurs (13) sont obtenus par une mise en forme intégrale au niveau du bord extérieur de chaque tôle de plancher (2) et/ou au niveau du bord inférieur de chacune des deux tôles (3/1, 3/2) formant une paroi latérale (3), auquel cas les longerons extérieurs (13) sont formés à chaque fois comme un support de caisson fermé soit
- par une goulotte (14) ou une cavité (15) réalisée vers le bas, au niveau de la zone du bord extérieur d'une tôle de plancher (2), et par le profilage de la zone du bord inférieur des deux tôles (3/1, 3/2) formant une paroi latérale (3) dans le sens d'une goulotte (16) ouverte vers le haut, auquel cas les deux tôles (3/1, 3/2) présentent, au niveau de leur zone de bord inférieur, des surfaces de raccordement (17, 18) au minimum approximativement verticales avec lesquelles elles s'appuient contre les surfaces correspondantes (19, 20) de la goulotte (14) ou de la cavité (15) pour y être fixées et il en résulte ainsi le longeron extérieur (13) après assemblage de la tôle de plancher (2) avec les deux tôles de paroi latérale (3/1, 3/2) comme support de caisson, soit
- par un profilage de la zone du bord inférieur des deux tôles (3/1, 3/2) formant une paroi latérale (3) avec une cavité concave et/ou convexe (21, 22) et des surfaces d'appui (23, 24, 25, 26) en dessous et au-dessus de celles-ci de telle manière qu'après assemblage de ces deux tôles de parois latérales (3/1, 3/2) et après liaison de celles-ci au niveau de surfaces d'appui (23, 25 ; 24, 26) appliquées l'une contre l'autre, on obtient un support de caisson fixé sur le bord extérieur replié (27) de la tôle de plancher (2).

2. Construction de plancher selon la revendication 1, **caractérisée en ce que** les longerons intérieurs (4) sont obtenus par la mise en forme intégrale dans la tôle du tunnel moteur (1) et/ou des tôles de plancher (2), adjacentes à celle-ci, auquel cas les longerons intérieurs (4) sont formés à chaque fois comme support de caisson fermé soit
- par la zone de bord intérieur (8) d'une tôle de plancher (2) à laquelle on a donné en section une forme de profilé en U avec une goulotte (5) déformée vers le bas et des surfaces d'appui (6, 7) existantes de chaque côté de la goulotte, auquel cas la tôle de tunnel moteur (1) dont la section a également une forme de profilé en U recouvre la goulotte (5) intérieure à la tôle de plancher à chaque fois avec l'une de ses deux découpes transversales inférieures (1/1, 1/2) et est fixée en appui sur les surfaces d'appui présentes de chaque côté de celle-ci, soit
- par la découpe transversale (1/3) extérieure réalisée sur le bas et en bas et formée en section sous forme de profilé en U d'une goulotte (9) déformée vers le bas et de surfaces d'appui existantes de chaque côté de la goulotte sur la tôle de tunnel moteur (1), sur laquelle est fixée une tôle de plancher (2) recouvrant la goulotte (9) formant un support avec sa zone de bord (12) plat et étant en appui sur les surfaces d'appui (10, 11) existantes de chaque côté de la goulotte.
